# EUROPÄISCHE PATENTANMELDUNG

(11) **EP 0 870 882 A2**
(43) Veröffentlichungstag der Anmeldung: **14.10.1998**
(21) Anmeldenummer: 98104388.8
(22) Anmeldetag: 11.03.1998
(51) Int. Cl.: E04C 1/39

(54) **Pflanzkübel zur Begrünung von Böschungen, Steilwällen und Mauern**

(30) Priorität: 07.04.1997 DE 29706152 U
(71) Anmelder: KANN GmbH Baustoffwerke, 56170 Bendorf-Mülhofen (DE)
(72) Erfinder: Esser, Clemens, 53359 Rheinbach (DE)
(74) Vertreter: Grünecker, Kinkeldey, Stockmair & Schwanhäusser Anwaltssozietät

(57) **Zusammenfassung**

Bei dem erfindungsgemäßen Pflanzkübel zur Begrünung von Böschungen, Steilwällen und Mauern ist im Inneren des Pflanzkübels ein festes, wasserundurchlässiges, dreidimensionales Kunststoffgebilde (3) vorgesehen, das der Innenseite der Seitenwandung des Pflanzkübels zugeordnet ist, wobei die Unterkante dieses Kunststoffgebildes (3) eine Rückhalteeinrichtung (4) in Form einer Rinne zum Sammeln und Speichern von Wasser ausbildet.

## Beschreibung

Die vorliegende Erfindung bezieht sich auf einen Pflanzkübel der im Oberbegriff des Anspruchs 1 angegebenen Gattung. Pflanzkübel zur Begrünung von Böschungen, Steilwällen und Mauern sind bekannt. Ein solcher Pflanzkübel mit rechteckiger Grundfläche und einem Seitenverhältnis von ca. 1:1,5 wird von der Firma KANN GmbH Baustoffwerke im Sortiment geführt und für die Bepflanzung von Böschungen mit steilem Böschungswinkel bereitgestellt. Dieser Pflanzkübel wird meist kasten- oder röhrenförmig ohne Deckel und Boden hergestellt, wobei auch andere Ausführungsformen möglich sind. Neben der Aufnahme des Pflanzsubstrates kommt dem Pflanzkübel auch eine Funktion als Stützrahmen zu, indem mehrere Pflanzkübel entlang des Böschungsverlaufes versetzt übereinandergestapelt werden und sich so durch ihr Gewicht, gegebenenfalls unterstützt von einer Nut- und Federkonstruktion, selbst sichern. Daraus ergibt sich, daß ein Pflanzkübel aus einem Baustoff hergestellt werden muß, der dieser Belastung standhält. Beton entspricht dieser Anforderung, weshalb dieses Material auch häufig zur Herstellung von Pflanzkübeln verwendet wird. Daneben ist aber auch der Einsatz anderer Materialien, die diese Anforderung erfüllen, möglich.

Nachteilhaft ist beim Einsatz bestimmter Baustoffe, insbesondere bei Beton, die sich aus deren poröser Struktur ergebende Wasserdurchlässigkeit. Die im Pflanzkübel befindliche Wassermenge kann nicht nur über die nach oben weisende Oberfläche verdampfen sowie ins Erdreich versickern, sondern auch über die poröse, wasserdurchlässige Seitenwandung verdunsten. Die Wasserzufuhr dagegen erfolgt bei senkrecht fallendem Regen nur über die nach oben weisende Oberfläche. Die Wasserabgabe findet also über eine größere Fläche als die Wasseraufnahme statt, was zu einer relativ schnellen Verminderung der Wassermenge im Pflanzkübel führt, wodurch dessen Vegetationstauglichkeit beeinträchtigt wird.

In der DE 28 22 564 A1 wird der Versuch unternommen, dieses Problem dadurch zu lösen, indem ein wasserrückhaltender, das Pflanzsubstrat aufnehmender Pflanztopf in den Pflanzkübel eingesetzt ist. Dieser Pflanztopf besitzt eine Seitenwandung sowie einen Boden, in dem sich ein Wasserablaufloch befindet. Bei stärkeren, andauernden Regenfällen gelangt jedoch eine größere Wassermenge in den Pflanztopf, als durch den Ablauf wieder abfließen kann. Das bedeutet, daß sich über längere Zeit Wasser im Pflanztopf sammelt, so daß es im Pflanztopf zu Staunässe kommt. Es ist ferner nachteilhaft, daß der Ablauf leicht verstopfen kann, was wiederum dazu führt, daß sich Wasser im Pflanztopf sammelt.

Schließlich eignet sich dieser vorgeschlagene Pflanztopf nur bedingt für die Verwendung in übereinandergestapelten Pflanzkübeln, da sich das Wasser in den oben angeordneten Pflanzkübeln sammelt und nicht bis in die unten angeordneten Pflanzkübel gelangt.

Der Erfindung liegt die Aufgabe zugrunde, einen Pflanzkübel anzugeben, der die vorstehend erörterten Nachteile des Standes der Technik vermeidet und günstige Voraussetzungen für die Entwicklung der Vegetation schafft.

Diese Aufgabe wird hinsichtlich des erfindungsgemäßen Pflanzkübels durch die im Kennzeichen des Anspruchs 1 angegebenen Merkmale gelöst.

Der mit der Erfindung erzielte Vorteil ist zum einen darin zu sehen, daß der Wasserverlust über die Seitenwandung des Pflanzkübels mit Hilfe des Kunststoffgebildes, das der Innenseite der Seitenwandung zugeordnet ist, reduziert wird. Die sich somit länger im Pflanzkübel haltende Wassermenge verbessert dessen Vegetationstauglichkeit. Zum anderen gestattet die in Form einer Rinne ausgebildete Unterkante dieses Kunststoffgebildes die Rückhaltung von Wasser, so daß die großen Wassermengen, die während der sommerlichen kurzen, aber starken Regenfälle niedergehen, zur Überbrückung der Trockenperioden genützt werden können. Gleichzeitig wird durch die rinnenförmige Ausbildung der Rückhalteeinrichtung eine ausreichende große Fläche im unteren Bereich des Kunststoffgebildes freigehalten, durch die in regenreichen Monaten überschüssiges Wasser problemlos abfließen kann. Diese rinnenförmige Ausbildung birgt weiterhin den Vorteil, daß bei einer stapelweisen Anordnung mehrerer Pflanzkübel eine ausreichende Wassermenge von den oben angeordneten Pflanzkübeln zu den unten angeordneten Pflanzkübeln gelangt. Der von der Anmelderin vorgeschlagene Pflanzkübel ist also so ausgebildet, daß sich trotz jahreszeitlich stark unterschiedlicher Niederschlagsmengen ein mehr oder weniger konstanter Feuchtigkeitsgehalt im Pflanzkübel einstellt, was dessen Vegetationstauglichkeit zugute kommt.

Eine weitere vorteilhafte Ausgestaltung der Erfindung ist im Anspruch 2 angegeben. Dabei wird der Pflanzkübel in einer Ausführung unter anderem entweder mit rechteckiger oder dreieckiger oder kreisförmiger oder elliptischer Grundfläche hergestellt.

Die Erfindung wird im folgenden anhand von Ausführungsbeispielen und unter Bezug auf die Zeichnung näher erläutert. Darin zeigt:
- Fig. 1: einen horizontalen Schnitt durch einen kastenförmigen Pflanzkübel, der eine Ausführungsform der Erfindung darstellt,
- Fig. 2: einen vertikalen Schnitt durch die in Fig. 1 gezeigte Ausführungsform,
- Fig. 3: einen horizontalen Schnitt durch einen kastenförmigen Pflanzkübel, der eine weitere Ausführungsform der Erfindung darstellt,
- Fig. 4: einen vertikalen Schnitt durch die in Fig. 3 gezeigte Ausführungsform und
- Fig. 5: einen horizontalen Schnitt durch einen kastenförmigen Pflanzkübel, der eine weitere Ausführungsform der Erfindung darstellt.

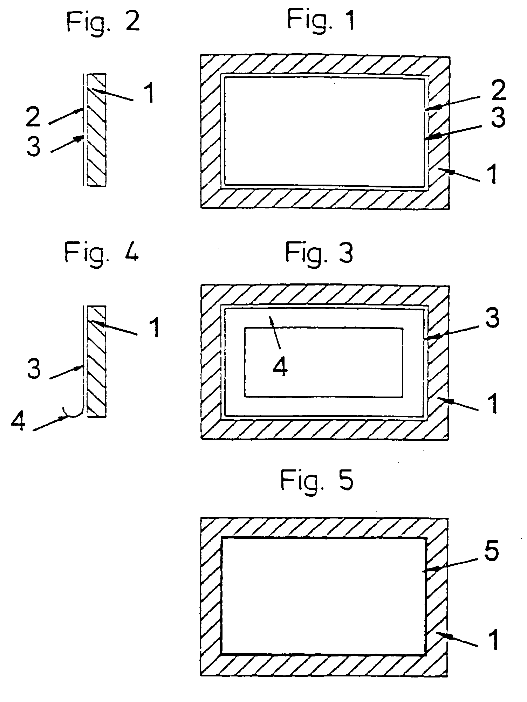

Fig. 1 zeigt einen Pflanzkübel 1 in einer Ausführung mit rechteckiger Grundfläche, derweder Boden noch Deckel besitzt. An dessen innerer Wandung befindet sich die Kapillarsperre in Form einer Folie 2 und alternativ in Form eines festen dreidimensionalen Kunststoffgebildes 3. Fig. 1 zeigt, wie die Kontur des festen, dreidimensionalen Kunststoffgebildes 3 der Kontur der Innenwandung des Pflanzkübels 1 entspricht. Absichtsvoll oder aufgrund von Unebenheiten in der Innenwandung entsteht ein Abstand zwischen der Folie 2 und der Innenwandung des Pflanzkübels 1, wie aus Fig. 2 ersichtlich. Der Abstand dagegen, der zwischen dem festen, dreidimensionalen Kunststoffgebilde 3 und der Innenwandung des Pflanzkübels 1 entsteht, ist durch die Ausmaße des festen, dreidimensionalen Kunststoffgebildes 3 bestimmt.

Fig. 3 zeigt einen Pflanzkübel 1 in einer Ausführung mit rechteckiger Grundfläche, der weder Boden noch Deckel besitzt. Dieser Pflanzkübel 1 ist mit einem festen, dreidimensionalen Kunststoffgebilde 3 versehen, das mit einer Rückhalteeinrichtung 4 erweitert ist, die es erlaubt, Wasser zu sammeln und zu speichern. Wie aus Fig. 3 weiterhin zu ersehen ist, kann durch Verbreiterung der projizierten Fläche der Rückhalteeinrichtung 4 bei gleichbleibender Rinnenkrümmung das Rückhaltevolumen und somit die speicherbare Wassermenge vergrößert werden.

Fig. 4 zeigt, wie sich die Rückhalteeinrichtung 4 rinnenförmig an die Unterkante des festen, dreidimensionalen Kunststoffgebildes 3 anschließt.

Fig. 5 ist ein Pflanzkübel 1, auf dessen Innenwandung eine wasserundurchlässige Schicht 5 aufgebracht ist. Diese Schicht 5 kann neben anderen Materialien aus Kunststoff oder einem gummiartigen Material bestehen und auf die Innenwandung aufgespritzt oder aufgewalzt oder durch ein anderes Verfahren aufgebracht werden. Im Gegensatz zu der in Fig. 1 gezeigten Ausführungsform ist bei dieser Ausführungsform kein Abstand zwischen der Kapillarsperre und der Innenwandung vorhanden. Die Form des Pflanzkübels 1 beschränkt sich nicht auf die rechteckige Ausführung, wie in Fig. 1 bis Fig. 5 gezeigt, sondern kann unter anderem auch von einer dreieckigen oder kreisförmigen oder elliptischen Grundfläche ausgehen.

## Patentansprüche

1. Pflanzkübel (1) zur Begrünung von Böschungen, Steilwällen und Mauern, insbesondere aus Beton, mit wenigstens einer wasserdurchlässigen Seitenwandung, **dadurch gekennzeichnet**, daß der Innenseite der Seitenwandung des Pflanzkübels ein festes, wasserundurchlässiges, dreidimensionales Kunststoffgebilde (3) zugeordnet ist, wobei die Unterkante dieses Kunststoffgebildes (3) als Rückhalteeinrichtung (4) in Form einer Rinne zum Sammeln und Speichern von Wasser ausgebildet ist.

2. Pflanzkübel (1) nach Anspruch 1, **dadurch gekennzeichnet**, daß der Pflanzkübel (1) unter anderem in einer Ausführung entweder mit rechteckiger oder dreieckiger oder kreisförmiger oder elliptischer Grundfläche vorliegt.
